(19) Europäisches Patentamt
European Patent Office
Office européen des brevets

(11) Veröffentlichungsnummer: **0 431 399 A2**

# (12) EUROPÄISCHE PATENTANMELDUNG

(21) Anmeldenummer: **90122240.6**

(51) Int. Cl.5: **C08G 64/28**, C08G 63/64

(22) Anmeldetag: **21.11.90**

(30) Priorität: **05.12.89 DE 3940121**

(43) Veröffentlichungstag der Anmeldung:
**12.06.91 Patentblatt 91/24**

(84) Benannte Vertragsstaaten:
**BE DE FR GB IT NL**

(71) Anmelder: **BAYER AG**

**W-5090 Leverkusen 1 Bayerwerk(DE)**

(72) Erfinder: **Idel, Karsten Josef, Dr.**
**Am Schwarzkamp 38**
**W-4150 Krefeld(DE)**
Erfinder: **Jung, Alfred, Dr.**
**Bodelschwinghstraat 12**
**W-4150 Krefeld(DE)**

## (54) Verfahren zur Herstellung von hochmolekularen Polycarbonaten und Polyestercarbonaten.

(57) Gegenstand der vorliegenden Erfindung ist die Herstellung von Polycarbonaten und von Polyestercarbonaten nach dem Phasengrenzflächenverfahren, das dadurch gekennzeichnet ist, daß man als Kohlensäurederivat Kohlensäurebistrichlormethylester einsetzt.

EP 0 431 399 A2

Xerox Copy Centre

## VERFAHREN ZUR HERSTELLUNG VON HOCHMOLEKULAREN POLYCARBONATEN UND POLYESTERCARBONATEN

Gegenstand der vorliegenden Erfindung ist ein Verfahren zur Herstellung von hochmolekularen, thermoplastischen Polycarbonaten aus Diphenolen, Kohlensäurederivaten, Kettenabbrechern und gegebenenfalls Verzweigern nach der Methode des Phasengrenzflächenverfahrens im Gemisch von wäßrig/alkoholischer Phase und organischer Phase, das dadurch gekennzeichnet ist, daß man als Kohlensäurederivat Kohlensäurebistrichlormethylester einsetzt.

Die Menge an Kohlensäurebistrichlormethylester beträgt pro Mol Diphenol zwischen 33,3 Mol-% und 50 Mol-%, vorzugsweise zwischen 38 Mol-% und 47 Mol-%.

Die Reaktionstemperaturen liegen zwischen +10 °C und 30 °C, vorzugsweise zwischen +15 °C und +25 °C.

Die Reaktionszeiten liegen zwischen 5 Minuten und 80 Minuten, vorzugsweise zwischen 15 Minuten und 60 Minuten.

Als wäßrige Phase dient vorzugsweise wäßrige Natronlauge.

Als organische Phase dient vorzugsweise Methylenchlorid.

Die Herstellung von Polycarbonaten nach dem Phasengrenzflächenverfahren ist bekannt (vgl. H. Schnell, "Chemistry and Physics of Polycarbonates", Polymer Reviews, Vol. IX, Seite 33 ff., Interscience Publ., 1964).

Zur Herstellung der Polycarbonate werden dabei die Bisphenole alleine, oder zur Herstellung von Copolycarbonaten im Gemisch mit mindestens einem weiteren Bisphenol und Phosgen umgesetzt.
Folgende Diphenole sind besonders geeignet:
Hydrochinon,
Resorcin,
Dihydroxidiphenyle,
Bis-(Hydroxyphenyl)-alkane,
Bis-(Hydroxyphenyl)-cycloalkane,
Bis-(Hydroxyphenyl)-sulfide, Bis-(Hydroxyphenyl)-ether,
Bis-(Hydroxyphenyl)-ketone,
Bis-(Hydroxyphenyl)-sulfone,
Bis-(Hydroxyphenyl)-sulfoxide,
α,α'-Bis-(Hydroxyphenyl)-diisopropylbenzole,
sowie deren kernalkylierte und kernhalogenierte Verbindungen.

Diese und weitere geeignete Diphenole sind z.B. in den US-PS 3 028 365, 2 999 835, 3 148 172, 2 991 273, 3 271 367 und 2 999 846, in den deutschen Offenlegungsschriften 1 570 703, 2 063 050, 2 036 052, 2 211 956, der französischen Patentschrift 1 561 518, in der Monographie "H. Schnell, Chemistry and Physics of Polycarbonates, Interscience Publishers, New York 1964" und in der deutschen Patentanmeldung P 38 32 396.6 (Le A 26 344) beschrieben.

Bevorzugte Diphenole sind z.B.: 4,4'-Dihydroxydiphenyl, 2,2-Bis-(4-hydroxiphenyl)-propan, 2,4-Bis-(4-hydroxiphenyl)-2-methylbutan, 1,1-Bis-(4-hydroxiphenyl)-cyclohexan, α,α-Bis-(4-hydroxiphenyl)-p-diisopropylbenzol, 2,2-Bis-(3-methyl-4-hydroxiphenyl)-propan, 2,2-Bis-(3-chlor-4-hydroxiphenyl)-propan, Bis-(3,5-dimethyl-4-hydroxiphenyl)-methan, 2,2-Bis-(3,5-dimethyl-4-hydroxiphenyl)-propan, Bis-(3,5-Dimethyl-4-hydroxyphenyl)-sulfon, 2,4-Bis-(3,5-dimethyl-4-hydroxiphenyl)-2-methyl butan, 1,1-Bis-(3,5-dimethyl-4-hydoxiphenyl)-cyclohexan, α,α'-Bis-(3,5-dimethyl-4-hydroxyphenyl)-p-diisopropylbenzol, 2,2-Bis-(3,5-dichlor-4-hydroxiphenyl)-propan, 2,2-Bis-(3,5-dibrom-4-hydroxyphenyl)-propan und 1,1-Bis-(4-hydroxyphenyl)-3,3,5-trimethylcyclohexan.

Besonders bevorzugte Diphenole sind z.B.: 2,2-Bis-(4-hydroxiphenyl)-propan, 2,2-Bis-(3,5-dimethyl-4-hydroxiphenyl)-propan, 2,2-Bis-(3,5-dichlor-4-hydroxiphenyl)-propan, 2,2-Bis-(3,5-dibrom-4-hydroxiphenyl)-propan, 1,1-Bis-(4-hydroxiphenyl)-cyclohexan und 1,1-Bis-(4-hydroxyphenyl)-3,3,5-trimethylcyclohexan.

Es können auch beliebige Mischungen der vorgenannten Diphenole verwendet werden.

Geeignete Katalysatoren für die Phasengrenzflächenreaktion sind beispielsweise Sulfonium- oder Phosphoniumsalze, besonders aber quartäre Ammoniumsalze und Amine, besonders bevorzugt tertiäre - wie z.B. Triethylamin - und heterocyclische - wie z.B. N-Ethylpiperidin - (DE-OS 2 735 775 (Le A 18 231) Amine.

Geeignete Kettenabbrecher sind beispielsweise Phenol, p-Chlorphenol, p-tert.-Butylphenol oder 2,4,6-Tribromphenol, aber auch langkettig Alkylphenole, wie 4-(1,3-Tetramethylbutyl)-phenol gemäß DE-OS 2 842 005 oder Monoalkylphenole bzw. Dialkylphenole mit insgesamt 8 bis 20 C-Atomen in den Alkylsubstituenten

gemäß deutscher Offenlegungsschrift 3 506 472 (Le A 23 654) wie 3,5-di-tert.-Butylphenol, p-iso-Octylphenol, p-tert.-Octylphenol, p-Dodecylphenol, 2-(3,5-Dimethyl-heptyl)-phenol und 4-(3,5-Dimethyl-heptyl)-phenol.

Zwecks Verbesserung des Fließverhaltens können auch geringe Mengen, vorzugsweise Mengen zwischen 0,05 und 2,0 Mol.-% (bezogen auf eingesetzte Diphenole) an tri- oder höherfunktionellen Verbindungen, insbesondere solchen mit drei oder mehr als dei phenolischen Hydroxylgruppen, mitverwendet werden. Einige der verwendbaren Verbindungen mit drei oder mehr phenolischen Hydroxylgruppen sind beispielsweise

Phloroglucin,
4,6-Dimethyl-2,4,6-tri-(4-hydroxiphenyl)-hepten-2,
4,6-Dimethyl-2,4,6-tri-(4-hydroxiphenyl)-heptan,
1,3,5-Tri-(4-hydroxiphenyl)-benzol,
1,1,1-Tri-(4-hydroxiphenyl)-ethan,
Tri-(4-hydroxiphenyl)-phenylmethan,
2,2-Bis-(4,4-bis-(4-hydroxiphenyl)-cyclohexyl)-propan,
2,4-Bis-(4-hydroxiphenyl-isopropyl)-phenol,
2,6-Bis-(2-hydroxi-5'-methyl-benzyl)-4-methylphenol,
2-(4-Hydroxiphenyl)-2-(2,4-dihydroxiphenyl)-propan,
Hexa-(4-(4-hydroxiphenyl-isopropyl)-phenyl)-orthoterephthalsäureester,
Tetra-(4-hydrophenyl)-methan,
Tetra-(4-hydroxiphenyl-isopropyl)-phenoxy)-methan und
1,4-Bis-((4'-,4"-dihydrotriphenyl)-methyl)-benzol.

Einige der sonstigen trifunktionellen Verbindungen sind 2,4-Dihydroxibenzoesäure, Trimesinsäure, Cyanurchlorid und 3,3-Bis-(3-methyl-4-hydroxiphenyl)-2-oxo-2,3-dihydroindol.

Der Vorteil des erfindungsgemäßen Verfahrens besteht darin, daß die schwierige Handhabung des Phosgens vermieden werden kann, der Kohlensäure-bis-trichlormethylester (Triphosgen) (siehe C. Conncier, Ber. Dtsch. Chem. Ges. B. 1697 (1980) einen Feststoff darstellt (Schmelzpunkt 78° C), welcher leichter zu handhaben und zu dosieren ist.

Darüber hinaus ergeben sich beim Arbeiten mit Triphosgen weitere überraschende Vorteile. So kann Triphosgen z.B. bei 203 bis 207° C unzersetzt destilliert werden. Es tritt außerdem keine Veränderung in konzentrierter Schwefelsäure oder kalter Natronlauge auf.

Es ist bekannt, anstelle von Phosgen Kohlensäure-bis-trichlormethylester (Triphosgen) in der Synthese von Polycarbonaten einzusetzen (DOS 3 440 141), doch wird nur über die Umsetzung in homogener Phase (Dichlormethan, o-Dichlorbenzol) bei Reaktionszeiten von 20 Stunden und Ausbeuten von 75 % berichtet, wobei das Molekulargewicht nicht sehr hoch zu sein scheint.

Die Reaktionsbedingungen für das erfindungsgemäße Polycarbonatherstellungsverfahren unter Verwendung von Triphosgen sind derart, daß man die phenolischen Komponen ten in einem Gemisch aus Natronlauge und inertem organischen Lösungsmittel löst oder suspendiert und danach das Triphosgen zugibt und löst. Nach kurzer Reaktionszeit von einigen Minuten wird der Polykondensationskatalysator in Mengen von 0,2 Mol-% bis 1,5 Mol-%, vorzugsweise von 0,5 Mol-% bis 1 Mol-%, bezogen auf Mole Diphenole, zugegeben und danach bis zur vollen Reaktionszeit auskondensieren lassen.

Hierbei zeigte es sich, daß auch Diphenole wie beispielsweise 6,6-Dihydroxy-3,3,3',3'-tetramethyl-1,1'-Spirobisindan,

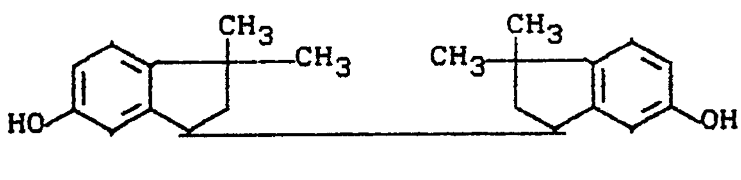

die mit Phosgen nur schwierig und mit weniger guten Ausbeuten zu Polycarbonaten umsetzbar sind, nach dem erfindungsgemäßen Verfahren in Ausbeuten bis zu 80 % der Theorie zu Polycarbonaten reagieren.

Wird in dem erfindungsgemäßen Verfahren ein Teil des Triphosgens durch aromatische Dicarbonsäuredichloride ersetzt, so gelangt man zu den entsprechenden, aromatischen Polyestercarbonaten.

Gegenstand der vorliegenden Erfindung ist somit auch die Modifizierung des erfindungsgemäßen Verfahrens zwecks Herstellung von Polyestercarbonaten, das dadurch gekennzeichnet ist, daß man bis zu 4/5 der jeweils einzusetzenden Menge an Kohlensäurebistrichlormethylester durch aromatische Dicarbonsäuredichloride ersetzt, wobei 1 Mol Kohlensäurebistrichlormethylester 3 Mol Phosgen, also 3 Mol Disäuredichlorid entspricht.

Die bevorzugte Menge an aromatischem Dicarbonsäuredichlorid beträgt zwischen 1/5 und 3/5 der jeweils einzusetzenden Menge an Kohlensäurebistrichlormethylester, wobei wiederum zu berücksichtigen ist, daß 1 Mol Kohlensäurebistrichlormethylester 3 Mol Phosgen, also 3 Mol Disäuredichlorid entspricht.

Bevorzugte aromatische Dicarbonsäuredichloride sind Terephthalsäuredichlorid, Isophthalsäuredichlorid sowie Mischungen dieser beiden Dichloride.

Die nach dem erfindungsgemäßen Verfahren erhältlichen Polycarbonate haben Molekulargewichte $\overline{M}w$ (Gewichtsmittel, ermittelt in bekannter Weise durch Messung der sel. Viskosität in $CH_2Cl_2$ bei 25° C und einer Konzentration von 0,5 g in 100 ml $CH_2Cl_2$ vonn 10 000 bis 100 000, insbesondere von 20 000 bis 80 000.

Die erhaltenen Polycarbonate sind entweder literaturbekannt oder Gegenstand der deutschen Patentanmeldung P 38 32 396.6 (Le A 26 344) soweit sie auf Basis des 1,1-Bis-(4-hydroxyphenyl)-3,3,5-trimethylcyclohexans hergestellt werden.

Die nach dem erfindungsgemäßen Verfahren erhältlichen Polyestercarbonate auf Basis aromatischer Dicarbonsäuren haben in der Regel relative Lösungsviskositäten von 1,18 bis 2,0, insbesondere von 1,2 bis 1,5, gemessen in 0,5 gew.-%iger Lösung in $CH_2Cl_2$ bei 25° C.

Sie sind entweder aus der Literatur (beispielsweise DE-OS 3 007 934) bekannt oder Gegenstand der deutschen Patentanmeldung P 39 03 103.9 (Le A 26 313) soweit sie auf Basis des 1,1-Bis-(4-hydroxyphenyl)-3,3,5-trimethylcyclohexans hergestellt werden.

Die nach dem erfindungsgemäßen Verfahren erhältlichen Polycarbonate und Polyestercarbonate können die für diese Stoffklassen bekannten Additive wie beispielsweise Stabilisatoren oder Füllstoffe in den bekannten Mengen enthalten.

Die Verarbeitung der erfindungsgemäß erhältlichen Polycarbonate bzw. Polyestercarbonate zu beliebigen Formkörpern kann ebenfalls in bekannter Weise (z.B. durch Spritzguß, Extrusion) erfolgen.

Die nach dem erfindungsgemäßen Verfahren erhältlichen Polycarbonate sind beispielsweise auf dem Elektrosektor als Elektroisolierfolien verwendbar, wie dies für die bereits handelsüblichen Polycarbonate bekannt ist. Die nach dem erfindungsgemäßen Verfahren erhältlichen Polyestercarbonate sind beispielsweise überall dort einsetzbar, wo erhöhte Wärmeformbeständigkeit gebraucht wird, also beispielsweise im Elektrosektor oder Beleuchtungssektor, und zwar in Form von Spritzgußartikeln oder Folien.

<u>Beispiel 1</u> (Vergleichsbeispiel)

22,8 g (0,1 mol) Bisphenol A in 265 ml 6,5%iger Natronlauge und 0,34 g (3,63 mol.-%) Phenol in 180 ml Methylenchlorid werden bei Raumtemperatur unter Stickstoff vorgelegt. Anschließend werden in diese Lösung unter Kühlung 15,8 g (0,16 mol = 160 mol-%) Phosgen eingeleitet. Der pH-Wert wird mit 15 ml 45%iger Natronlauge bei 13 gehalten. Dann werden 0,1 ml (0,8 mol.-% N-Ethylpiperidin als Katalysator zugegeben und nach 45 min. Nachrühren wird die Reaktionslösung wie üblich aufgearbeitet. Die Ausbeute beträgt 23,4 g (92 %), die relative Lösungsviskosität wurde zu 1,277 (gemessen in Methylenchlorid bei 25° C und in einer Konzentration von 0,5 g/100 ml) bestimmt. Sie entspricht der nach der Theorie erwarteten.

<u>Beispiel 2</u>

11,4 g (0,05 mol) Bisphenol A in 130 ml 6,5%iger Natronlauge und 0,17 g (3,63 mol.-%) Phenol in 90 ml Methylenchlorid werden bei Raumtemperatur unter Stickstoff vorgelegt. Hierzu werden 6,4 g (0,022 mol = 130 mol Phosgen) Kohlensäure-bis-trichlormethylester zugegeben und gelöst. Nach 3 Minuten gibt man 0,05 ml (0,8 mol.-%) N-Ethylpiperidin untere Kühlung als Katalysator zu. Gleichzeitig wird der pH-Wert der Lösung auf 13 gehalten (leicht exotherme Reaktion). Nach weiteren 40 Minuten Nachrühren wird wie üblich aufgearbeitet. Man erhält 12,1 g (95 %) Polycarbonat mit einer relativen Lösungsviskosität von 1,276, wie in der Theorie erwartet.

<u>Beispiel 3</u> (Vergleichsbeispiel)

61,7 g (0,2 mol) 6,6-Dihydroxy-3,3,3',3'-tetramethyl-1,1'-sprobisindan in 525 ml 6,5%iger Natronlauge

und 0,094 g (0,5 mol.-%) Phenol in 450 ml Methylenchlorid werden bei Raumtemperatur unter Stickstoff vorgelegt. Hierbei geht das Bisphenol nicht in Lösung. Dann werden 42 g (0,42 mol = 215 mol-%) Phosgen unter Kühlung der Reaktionslösung bei einer Geschwindigkeit von 2 g/min in heterogener Phase eingeleitet. Gleichzeitig wird der pH-Wert der Lösung mit 35 ml 45%iger NaOH auf 13 gehalten. Schließlich gibt man 0,2 ml (0,8 mol.-%) N-Ethylpiperidin als Katalysator zu und arbeitet nach 45 Minuten wie üblich auf. Man erhält 42,8 g (64 %) Polycarbonat mit einer relativen Lösungsviskosität von 1,137.

Beispiel 4

15,42 (0,05 mol) 6,6-Dihydroxi-3,3,3'3'-tetramethyl-1,1'-Spirobisindan in 132 ml 5 %iger Natronlauge und 0,024 g (0,5 mol.-%) Phenol in 100 ml Methylenchlorid werden bei Raumtemperatur unter Stickstoff vorgelegt. Hierzu werden 6,4 g (0,022 mol $\hat{=}$ 130 mol-% Phosgen) Kohlensäure-bis-trichlormethylester zugegeben und gelöst, wobei auch das Bisphenol vollständig in Lösung geht. Nach 4 Minuten wird unter Kühlung 0,05 ml (0,8 mol.-%) N-Ethylpiperidin zugegeben und der pH-Wert mit 3 ml 45%iger Natronlauge bei 13 gehalten. Nach 40 min Nachrühren wird wie üblich aufgearbeitet. Man erhält 13,4 g (80 %) Polycarbonat mit einer relativen Lösungsviskosität von 1,230.

## Ansprüche

1. Verfahren zur Herstellung von hochmolekularen, thermoplastischen Polycarbonaten aus Diphenolen, Kohlensäurederivaten, Kettenabbrechern und gegebenenfalls Verzweigern nach der Methode des Phasengrenzflächenverfahrens im Gemisch von wäßrig/alkoholischer Phase und organischer Phase, das dadurch gekennzeichnet ist, daß man als Kohlensäurederivat Kohlensäurebistrichlormethylester einsetzt.

2. Verfahren gemäß Anspruch 1 zur Herstellung von Polyestercarbonaten, dadurch gekennzeichnet, daß man bis zu 4/5 jeweils einzusetzenden Menge an Kohlensäurebistrichlormethylester durch aromatische Dicarbonsäuredichloride ersetzt, wobei 1 Mol Kohlensäurebistrichlormethylester 3 Mol Disäuredichlorid entspricht.